# EUROPEAN PATENT SPECIFICATION

(11) **EP 3 766 753 B1**
(45) Date of publication and mention of the grant of the patent: **12.07.2023**
(21) Application number: 19766957.5
(22) Date of filing: 04.03.2019
(51) Int. Cl.: B60W 50/04, B60W 30/095, B60W 50/032

(54) **ABNORMALITY DIAGNOSIS SYSTEM AND ABNORMALITY DIAGNOSIS METHOD**
SYSTEM ZUR DIAGNOSE VON ANOMALIEN UND VERFAHREN ZUR DIAGNOSE VON ANOMALIEN
SYSTÈME DE DIAGNOSTIC D'ANOMALIE ET PROCÉDÉ DE DIAGNOSTIC D'ANOMALIE

(30) Priority: 13.03.2018 JP 2018045736
(43) Date of publication of application: 20.01.2021
(73) Proprietor: Hitachi Astemo, Ltd., Hitachinaka-shi, Ibaraki 312-8503 (JP)
(72) Inventor: SERIZAWA, Kazuyoshi, Hitachinaka-shi, Ibaraki 312-8503 (JP); EBINA, Tomohito, Hitachinaka-shi, Ibaraki 312-8503 (JP); NARISAWA, Fumio, Hitachinaka-shi, Ibaraki 312-8503 (JP)
(74) Representative: Mewburn Ellis LLP
(86) International application number: PCT/JP2019/008271
(87) International publication number: WO 2019/176603

(56) References cited:
- EP-A1- 1 785 326
- DE-A1-102011 108 292
- JP-A- H08 216 838
- JP-A- 2008 225 786
- JP-A- 2016 038 689
- JP-A- 2017 224 237
- US-A1- 2014 343 817
- US-A1- 2017 341 644
- US-A1- 2017 361 852

## Description

### Technical Field

The present invention relates to an abnormality diagnosis system that diagnoses an abnormality related to control of automatic driving of a vehicle.

### Background Art

In recent years, electronic control units (ECUs) for automatic driving have been developed in order to perform automatic driving of a vehicle. For example, as a diagnosis method of diagnosing an abnormality of the ECU for automatic driving, there is a method described in PTL 1. In the method described in PTL 1, a main ECU and a sub ECU each include a calculation unit and a failure detection unit, and the failure detection unit monitors a result of an operation amount calculated by the calculation unit. The failure detection unit monitors the amount of changes in the operation amount of the calculation result, and determines that the ECU fails when the amount of changes exceeds a predetermined range. When the calculation results of the operation amounts of the main ECU and the sub ECU do not match, it is determined that a failure occurs.

Meanwhile, as a technology related to the ECU for automatic driving, there is known a method of generating a risk map in order to decide a trajectory along which a host vehicle passes before a steering angle is calculated. The risk map is, for example, a map on which points at which the host vehicle may advance and risk levels obtained by quantifying risks when the host vehicle is present at these points are represented in association with each other on a plane.

### Citation List

### Patent Literature

PTL 1: JP 2017-196965 A
PTL 2: US2014/0343817 discloses a method and circuit arrangement in an electronic control unit of a motor vehicle for detecting faults
PTL 3: EP 1785326 discloses a vehicle driving assist system comprising risk potential calculation means.

### Summary of Invention

### Technical Problem

The complexity of the control of the automatic driving increases, and it may not be possible to determine that the control of the ECU for automatic driving is abnormal only by a simple change of the operation amount. For example, when it is assumed that the host vehicle is traveling on a road shoulder side of one-sided two-lane and avoids another vehicle parked and stopped on the road shoulder, it is considered that the vehicle can avoid another vehicle by slightly protruding toward a centerline side. As the trajectory along which the vehicle may pass, a trajectory along which the vehicle changes to a lane on the centerline side, and a trajectory along which the vehicle protrudes and avoids another vehicle without changing the lane are considered. Even when the lane is changed to the lane on the centerline side, there is a plurality of timings and a plurality of trajectories at which the vehicle changes the lane. In this case, even when the operation amount changes, the control of the ECU for automatic driving is not abnormal.

As described above, it is difficult to determine whether or not the control of the ECU for automatic driving is abnormal. Here, the abnormality of the control of the ECU for automatic driving includes an abnormality due to the ECU itself, an abnormality due to processing of the ECU, and an abnormality due to data input to the ECU.

The present invention has been made in view of the aforementioned circumstances, and an object of the present invention is to provide a technology capable of easily and appropriately diagnosing an abnormality related to control of automatic driving of a vehicle.

### Solution to Problem

In order to achieve the aforementioned object, an abnormality diagnosis system according to one aspect is an abnormality diagnosis system that includes a risk information generation unit which generates risk information related to a risk which is used for automatic driving control of a vehicle when the vehicle moves based on sensor information related to an object around the vehicle. The system includes a plurality of the risk information detection units, and a diagnosis unit that diagnoses whether or not an abnormality occurs in the generated risk information based on a plurality of pieces of risk information generated of the plurality of risk information generation units.

### Advantageous Effects of Invention

According to the present invention, there is provided a technology capable of easily and appropriately diagnosing an abnormality related to control of automatic driving of a vehicle.

### Brief Description of Drawings

[FIG. 1] FIG. 1 is an overall configuration diagram of a vehicle control system according to a first embodiment.
[FIG. 2] FIG. 2 is a functional configuration diagram of the vehicle control system according to the first embodiment.
[FIG. 3] FIG. 3 is a flowchart of diagnosis processing according to the first embodiment.
[FIG. 4] FIG. 4 is a diagram illustrating a situation in a traveling direction of a host vehicle according to the first embodiment.
[FIG. 5] FIG. 5 is a diagram for describing a risk map and overlooking of a risk according to the first embodiment.
[FIG. 6] FIG. 6 is a flowchart of diagnosis processing according to a modification example of the first embodiment.
[FIG. 7] FIG. 7 is an overall configuration diagram of a vehicle control system according to a second embodiment.
[FIG. 8] FIG. 8 is a flowchart of risk map extraction processing according to the second embodiment.
[FIG. 9] FIG. 9 is a flowchart of diagnosis processing according to the second embodiment.
[FIG. 10] FIG. 10 is an overall configuration diagram of a vehicle control system according to a third embodiment.
[FIG. 11] FIG. 11 is a flowchart of risk map extraction processing according to the third embodiment.
[FIG. 12] FIG. 12 is a flowchart of diagnosis processing according to the third embodiment.
[FIG. 13] FIG. 13 is an overall configuration diagram of a vehicle control system according to a fourth embodiment.
[FIG. 14] FIG. 14 is a functional configuration diagram of the vehicle control system according to a fourth embodiment.
[FIG. 15] FIG. 15 is a diagram for describing a method of deciding an overlooked risk list and an abnormal ECU according to the fourth embodiment.
[FIG. 16] FIG. 16 is a flowchart of diagnosis processing according to the fourth embodiment.
[FIG. 17] FIG. 17 is a functional configuration diagram of a vehicle control system according to a fifth embodiment.
[FIG. 18] FIG. 18 is a first system configuration diagram of the vehicle control system according to the fifth embodiment.
[FIG. 19] FIG. 19 is a second system configuration diagram of the vehicle control system according to the fifth embodiment.
[FIG. 20] FIG. 20 is an overall configuration diagram of a vehicle control system according to a sixth embodiment.
[FIG. 21] FIG. 21 is a functional configuration diagram of the vehicle control system according to the sixth embodiment.
[FIG. 22] FIG. 22 is an overall configuration diagram of a vehicle control system according to a seventh embodiment.
[FIG. 23] FIG. 23 is a functional configuration diagram of the vehicle control system according to the seventh embodiment.
[FIG. 24] FIG. 24 is a flowchart of diagnosis processing according to the seventh embodiment.

### Description of Embodiments

Embodiments will be described with reference to the drawings. The embodiments to be described below does not limit inventions according to the claims, and all elements and combinations described in the embodiments are not essential for the solution of the invention.

Although processing performed with a "program" as an operation subject may be described, the program is executed by a processor (for example, a central processing unit (CPU)), and thus, predetermined processing is appropriately performed by using a storage resource (for example, memory) and/or an interface device (for example, communication port). Accordingly, the subject of the processing may be a processor. The processing described with the program as the operation subject may be processing performed by a device including a processor. A dedicated hardware circuit that performs a part or all of the processing performed by the processor may be included. A computer program may be installed on a device from a program source. The program source may be, for example, a program distribution server or a non-transitory computer-readable storage medium.

First, a first embodiment will be described.

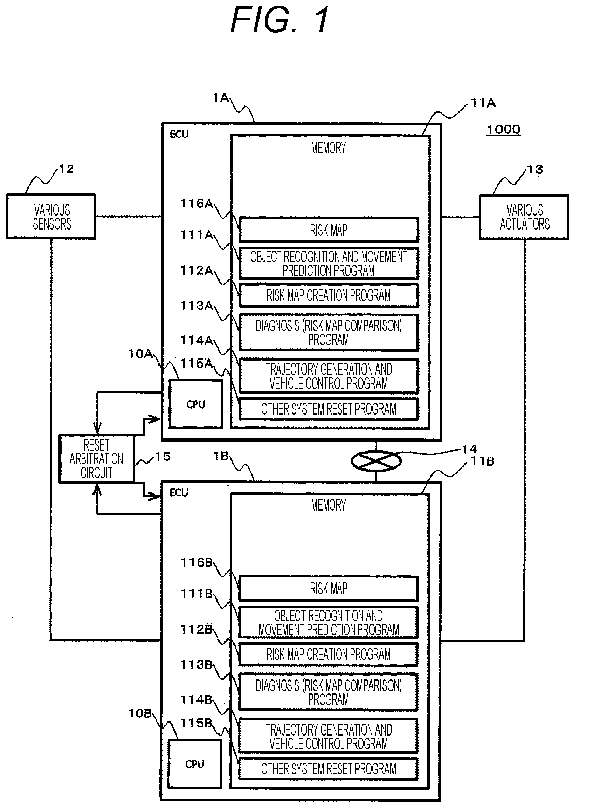

FIG. 1 is an overall configuration diagram of a vehicle control system according to the first embodiment.

A vehicle control system 1000 as an example of an abnormality diagnosis system is a system mounted on a vehicle such as an automobile, and includes various sensors 12, various actuators 13, a plurality of electronic control units (ECUs) 1A and 1B, and a reset arbitration circuit 15. The ECU 1A and the ECU 1B are connected to communicate with each other via an in-vehicle network 14. The in-vehicle network 14 may be any communication network such as Ethernet (registered trademark) and CAN-FD (CAN with Flexible Data-Rate).

The various sensors 12, the various actuators 13, and the reset arbitration circuit 15 are connected to the ECUs (1A and 1B) .

The various sensors 12 include one or more sensors such as a radar, a camera, and a GPS sensor for obtaining information on a surrounding environment of the vehicle. The various sensors 12 may include a sensor for obtaining map information, and a sensor for obtaining information on an own vehicle such as a vehicle speed and a steering angle. The various sensors 12 output the detected sensor information to the ECUs (1A and1B). In the various sensors 12, for all the pieces of sensor information, the sensor information may be output to the ECU 1A and the ECU 1B from the common sensor. For all the pieces of sensor information, the sensor information may be output to the ECU 1A and the ECU 1B from different individual sensors having the same function. For only some sensor information of the pieces of sensor information, the sensor information may be output to the ECU 1A and the ECU 1B from different individual sensors having the same function, and the remaining pieces of sensor information, the sensor information may be output to the ECU 1A and the ECU 1B from the common sensor.

The various actuators 13 include one or more actuators for operating an accelerator, a brake, and a steering wheel for operating traveling of the vehicle. The various actuators 13 control the traveling of the vehicle based on control information input from the ECU 1A or the ECU 1B.

The ECU 1A (1B) includes a CPU 10A (10B) and a memory 11A (11B) . The CPU 10A (10B) executes various processing according to a program stored in the memory 11A (11B). The memory 11A (11B) is, for example, a random access memory (RAM), and stores programs executed by the CPU 10A (10B) and necessary information.

The memory 11A (11B) stores an object recognition and movement prediction program 111A (111B), a risk map creation program 112A (112B), a diagnosis (risk map comparison) program 113A (113B), a trajectory generation and vehicle control program 114A (114B), and other system reset program 115A (115B), and a risk map 116A (116B) . Functions of the programs will be described later.

In the following description, the program may be described as the operation subject for the sake of convenience, but an actual execution subject is the CPU (10A, 10B) that executes the program.

The configurations of the ECU 1A and the ECU 1B may be the same or similar.

The risk map (116A, 116B) is an example of risk information, and is a map on which points at which the own vehicle (referred to as a host vehicle) may advance (for example, points in front of the host vehicle when the hot vehicle moves forward) and values (risk levels) obtained by quantifying risks when the host vehicle is present at these points are represented in association with each other on a plane.

The reset arbitration circuit 15 performs processing for receiving a reset request (reset signal) from each ECU (1A, 1B) and resetting the other ECU (other system). The reset arbitration circuit 15 decides the ECU to be reset according to a predetermined priority level when the reset request is received from the other ECU (that is, ECU 1B) until the other ECU (for example, ECU 1B) is reset after the reset request is received from one ECU (for example, ECU 1A), and resets the decided ECU.

Next, a functional configuration diagram of the vehicle control system 1000 will be described.

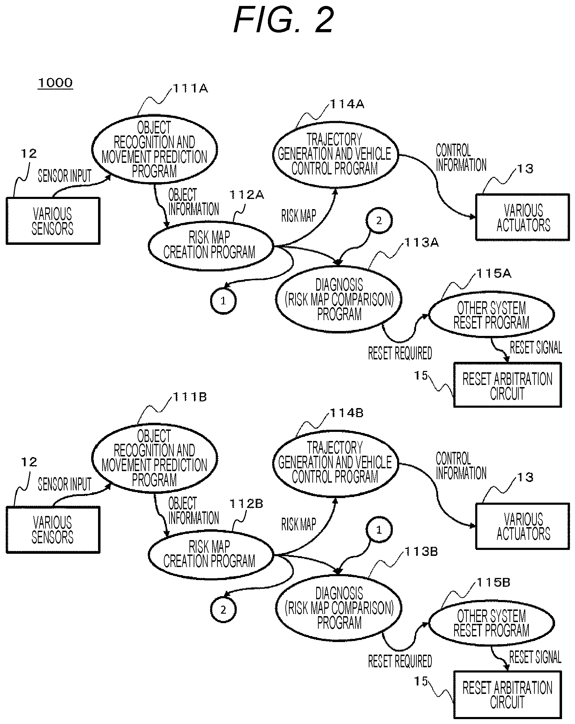

FIG. 2 is a functional configuration diagram of the vehicle control system according to the first embodiment. In FIG. 2, a functional configuration is described in a Data Flow Diagram format.

The object recognition and movement prediction program (111A, 111B) (actually, a functional unit constituted by the CPU (10A, 10B) that executes the object recognition and movement prediction program) receives sensor inputs (sensor information) from various sensors 12, recognizes an external object such as a preceding vehicle, predicts the movement of the object, and outputs object information.

The risk map creation program (112A, 112B) (actually, a functional unit constituted by the CPU (10A, 10B) that executes the risk map creation program: an example of a risk information generation unit) receives, as an input, the object information output from the object recognition and movement prediction program (111A, 111B), creates the risk map (116A, 116B), outputs the risk map to the diagnosis (risk map comparison) program (113A, 113B) of the ECU (host ECU) to which this risk map creation program belongs, and outputs the risk map to the diagnosis (risk map comparison) program (113B, 113A) of the other ECU. For example, the functional unit constituted by the CPU 10A that executes the risk map creation program 112A is a first risk information generation unit, and the functional unit constituted by the CPU 10B that executes the risk map creation program 112B is a second risk information generation unit.

The diagnosis (risk map comparison) program (113A, 113B) (actually, a functional unit constituted by the CPU (10A, 10B) that executes diagnosis (risk map comparison) program: an example of a diagnosis unit) transmits a risk map transmission request for requesting the transmission of the risk map created by the other ECU to the other ECU via the in-vehicle network 14. When the risk map transmission request is received from the other ECU via the in-vehicle network 14, the diagnosis (risk map comparison) program (113A, 113B) transmits the risk map of the host ECU (10A) to the other ECU (10B) as the risk map transmission request source. The diagnosis (risk map comparison) program (113A, 113B) compares the risk map output from the host ECU risk map creation program (112A, 112B) with the risk map acquired from the diagnosis (risk map comparison) program (113B, 113A) of the other ECU, diagnoses whether or not the risk map is abnormal (for example, whether or not the risk is not overlooked), and outputs a reset request indicating that handling processing (abnormality handling processing: for example, processing for resetting the ECU as the other system) for the abnormality of the other ECU (other system) is required to the other system reset program (115A, 115B) when the risk map is abnormal (here, when the risk is overlooked).

The trajectory generation and vehicle control program (114A, 114B) (actually, a functional unit constituted by the CPU (10A, 10B) that executes the trajectory generation and vehicle control program) generates a trajectory of the host vehicle from the risk map output by the risk map creation program (112A, 112B) of the host ECU, generates control information for controlling the various actuators 13 such that the host vehicle travels along the generated trajectory), and outputs the generated trajectory.

The other system reset program (115A, 115B) (actually, a functional unit constituted by the CPU (10A, 10B) : an example of an abnormality handling processing unit) that executes the other system reset program: an example of an abnormal response processing unit) outputs the reset signal for resetting the other ECU to the reset arbitration circuit 15 when the reset request output from the diagnosis (risk map comparison) program (113A, 113B) is received.

All the programs of the object recognition and movement prediction program (111A, 111B), the risk map creation program (112A, 112B), the diagnosis (risk map comparison) program (113A, 113B), the trajectory generation and vehicle control program (114A, 114B), and the other system reset program (115A, 115B) may have the same code between the ECU 11A and the ECU 11B. Alternatively, at least one of these programs may have the same function but may have a different configuration. For example, for example, when the program is constituted by performing learning, a program learned by using different data may be used or a program created by a different header may be used as the program having the same function and the different configuration. As stated above, defects in one program can be covered by the other program by using programs having the same function but different configurations between the ECUs, and thus, reliability can be improved as a whole.

Next, diagnosis processing will be described.

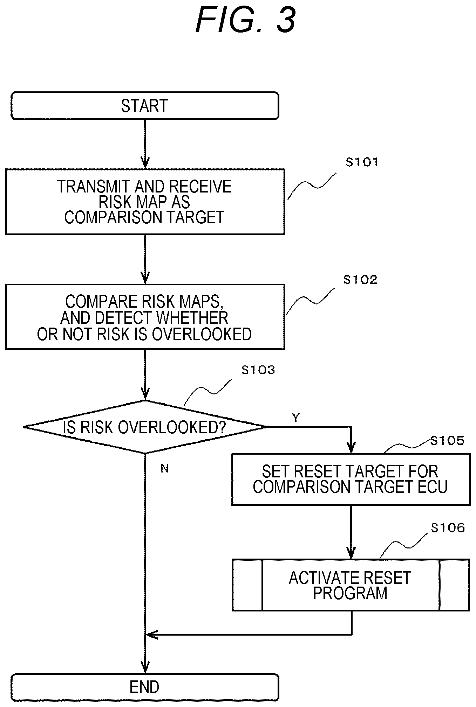

FIG. 3 is a flowchart of the diagnosis processing according to the first embodiment.

The diagnosis processing is executed by the CPU (10A, 10B) executing the diagnosis (risk map comparison) program (113A, 113B). For example, the diagnosis processing is executed by using, as a period, a time (relatively short time) during which the abnormality can be handled even though the abnormality occurs. Hereinafter, the processing of the diagnosis (risk map comparison) program 113A of the ECU 1A will be mainly described, but the processing of the diagnosis (risk map comparison) program 113B of the ECU 1B is similarly performed.

The diagnosis (risk map comparison) program 113A transmits and receives the risk map to and from the other ECU (ECU 1B) (step S101) . In the present embodiment, the diagnosis (risk map comparison) program 113A transmits the risk map transmission request to the ECU 1B via the in-vehicle network 14. As a result, the diagnosis (risk map comparison) program 113B of the ECU 1B transmits the risk map created by the ECU 1B to the diagnosis (risk map comparison) program 113A via the in-vehicle network 14. Accordingly, the diagnosis (risk map comparison) program 113A acquires the risk map created by the other ECU (ECU 1B) as a comparison risk map. As a modification example of the present embodiment, a configuration in which a risk map transmission program that transmits the risk map according to the risk map transmission request is provided separately from the diagnosis (risk map comparison) program 113B may be provided. With this configuration, there is no need for the diagnosis (risk map comparison) program 113A and the diagnosis (risk map comparison) program 113B to wait for each other in step S101.

Subsequently, the diagnosis (risk map comparison) program 113A compares the risk map generated by the ECU 1A with the risk map which is generated by and is acquired from the ECU 1B, and detects whether or not the risk is overlooked in the risk map generated by the ECU 1B (step S102). Here, the overlooking of the risk means that the risk is regarded to occur in one risk map (or the risk is high) but the risk is regarded not to occur in the other risk maps (or the risk is low).

As a result, when it is detected that the risk is overlooked (step S103: Y), the diagnosis (risk map comparison) program 113A generates the reset request set for the other ECU (here, ECU 1B) to be reset which is a comparison target (step S105), activates the other system reset program 115A, delivers the reset request (step S106), and ends the processing. Here, the activated other system reset program 115A transmits the reset signal for resetting the other ECU to be reset to the reset arbitration circuit 15 based on the reset request. As a result, the reset arbitration circuit 15 that receives the reset signal executes processing for resetting the ECU based on the received reset signal.

Meanwhile, when it is determined that the risk is not overlooked (step S103: N), the diagnosis (risk map comparison) program 113A ends the processing.

Next, the comparison of the risk maps in step S102 in the diagnosis processing will be described.

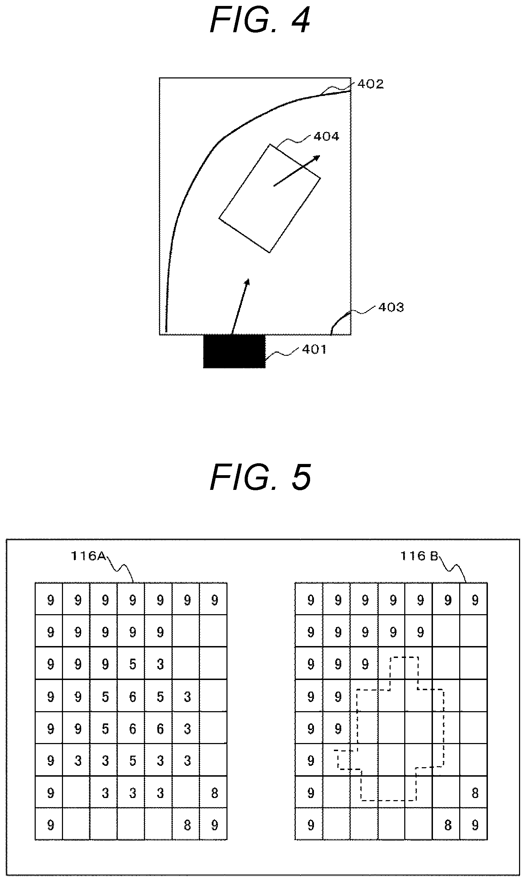

FIG. 4 is a diagram illustrating a situation in a traveling direction of the host vehicle according to the first embodiment.

Here, as illustrated in FIG. 4, a host vehicle 401 is about to enter a right curve separated by a road shoulder 402 and a centerline 403, and a preceding vehicle 404 is traveling in front of the host vehicle 401.

Next, the comparison between the risk map and the risk map will be described in conjunction with an example in which the host vehicle is in the situation illustrated in FIG. 4.

FIG. 5 is a diagram for describing the risk map and the overlooking of the risk according to the first embodiment. In FIG. 5, a risk map 116A illustrates an example of the risk map generated by the ECU 1A in the situation illustrated in FIG. 4, and a risk map 116B illustrates an example of the risk map generated by the ECU 1B in the situation illustrated in FIG. 4.

In the risk maps 116A and 116B illustrated in FIG. 5, each square corresponds to each position in FIG. 4, and a risk level in a case where the host vehicle 401 enters each position is set in the square. In the present embodiment, the risk level has a value of 0 (minimum) to 9 (maximum). In FIG. 5, the description is omitted and is blank for a risk level of 0.

In the risk map 116A, a position (upper left side in the diagram) outside the road shoulder 402 is set to a risk level of 9 since traveling is impossible, and a position (lower right side in the diagram) outside the centerline 403 is set to as risk levels of 8 to 9. Since there is a risk that the preceding vehicle 404 will come into contact with the host vehicle 401 when the preceding vehicle decelerates, a position of the preceding vehicle 404 and surrounding positions are set to risk levels of 3 to 6.

The setting of each position to the risk level is performed by the risk map creation program 112A.

Meanwhile, in the risk map 116B, the position of the preceding vehicle 404 and the surrounding positions are set to a risk level of 0 (squares indicated by a dotted line).

Here, when the risk maps 116A and 116B are normal, these risk maps may be the same or almost the same, but when any abnormality occurs, these risk maps are in different states.

When there are the risk map 116A and the risk map 116B illustrated in FIG. 5, the diagnosis (risk map comparison) program 113A compares the risk maps, and determines that the risk map 116B overlooks the risks of the squares indicated by the dotted line. That is, the CPU 10A that executes the diagnosis (risk map comparison) program 113A diagnoses that the abnormality occurs in the risk map 116B generated by the ECU 1B. In this case, it can be seen that the abnormality of any one (for example, the sensor that inputs the sensor information to the ECU 1B, the object recognition and movement prediction program 111B, the risk map generation program 112B, or the ECU 1B itself) of the elements involved in the generation of the risk map 116B occurs, and when there is the abnormality, there is a possibility that appropriate automatic control may not be performed. For example, in the determination of whether or not the risk is overlooked, it may be determined that the risk is overlooked when the risk level of one of the squares indicating the same position is 0 and the other risk level is not 0.

According to the aforementioned diagnosis processing, when the overlooking of the risk is detected in step S102 and the risk is overlooked in the risk map created by the other ECU, the other ECU that overlooks the risk in steps S105 and S106 can be reset. Accordingly, it is possible to appropriately detect the risk map in which the risk is overlooked, and it is possible to appropriately prevent vehicle control based on the risk map from being performed. Accordingly, safety in driving control can be improved.

In the aforementioned first embodiment, the following modification examples are considered.

For example, it has been described in the aforementioned embodiment that when two risk maps are compared in step S102, it is determined whether or not the risk is overlooked by comparing whether the value of the square of one risk map corresponding to the same position is 0 and the value of the square of the other risk map is different from 0. For example, when there is the risk in a region in which the risk level is higher than a predetermined threshold value, there is no risk in a region in which the risk level is lower than the same threshold value or a different threshold value, and a position of one risk map at which there is the risk becomes a position of the other risk map at which there is no risk, it may be determined that the risk is overlooked. It is possible to avoid a determination error in which the risk is overlooked in the other risk map due to erroneous detection of the risk level due to noise by performing such a determination.

The following diagnosis processing may be executed instead of the aforementioned diagnosis processing illustrated in FIG. 3.

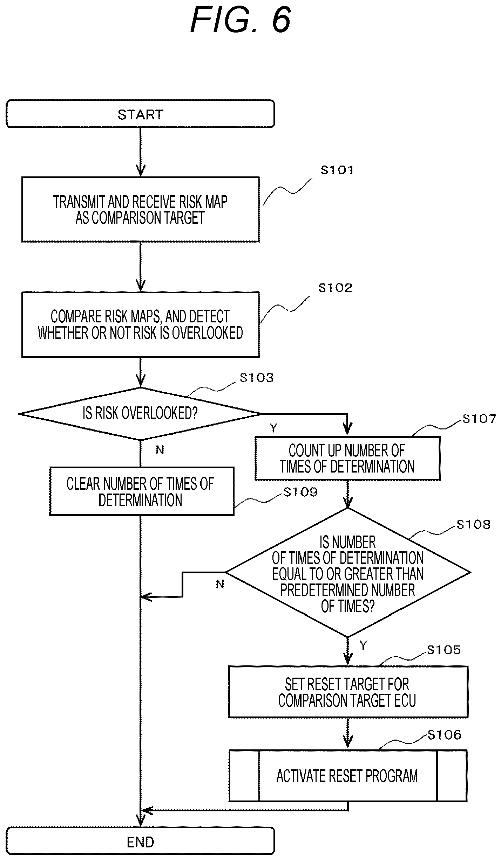

FIG. 6 is a flowchart of diagnosis processing according to a modification example of the first embodiment.

In FIG. 6, the same reference numerals are given to the same portions as those in the diagnosis processing in FIG. 3, and the redundant description will be omitted.

The diagnosis processing according to the modification example illustrated in FIG. 6 includes step S109 after N of step S103, and includes steps S107 and S108 between Y of step S103 and step S105.

When it is determined in step S103 that the risk is overlooked (step S103: Y), the diagnosis (risk map comparison) program 113A counts up the number of times (the number of times of determination) the risk is overlooked after a predetermined point of time (adds 1) (step S107), and determines whether or not the number of times of determination is equal to or greater than a predetermined number of times (step S108) . As a result, when the number of times of determination is not equal to or greater than the predetermined number of times (step S108: N), the diagnosis (risk map comparison) program 113A ends the processing without executing the subsequent processing (steps S105 and S106) for resetting the other ECU.

Meanwhile, when the number of times of determination is equal to or more than the predetermined number of times (step S108: Y), the diagnosis (risk map comparison) program 113A executes the subsequent processing (steps S105 and S106) for resetting the other ECU. When it is not determined that the risk is overlooked (step S103: N), since the risk map is not abnormal, the diagnosis (risk map comparison) program 113A clears the number of times of determination to 0 (step S109), and ends the processing.

It is possible to avoid erroneous determination for the overlooking of the risk due to a slight shift in timing at which the risk is detected between the ECUs by executing this processing.

Although it has been described in the present embodiment that the object recognition and movement prediction program (111A, 111B) is executed as one program in the ECU (1A, 1B) that executes the risk map creation program (112A, 112B), the present invention is not limited thereto. For example, the object recognition and movement prediction program (111A, 111B) may be divided into a plurality of programs, or may be executed by another ECU or a plurality of ECUs. Similarly, the trajectory generation and vehicle control program (114A, 114B) may be divided into a plurality of programs, or may be executed by another ECU or a plurality of ECUs.

Next, a second embodiment will be described.

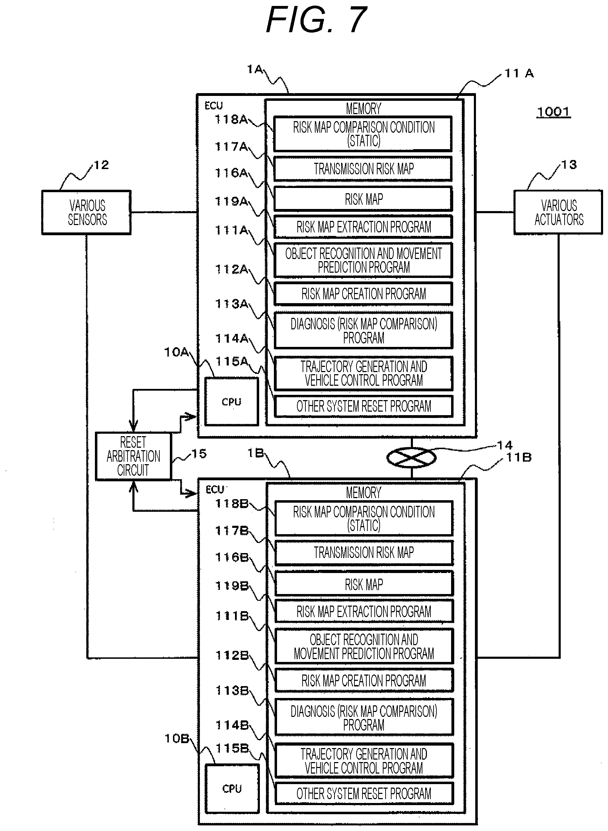

FIG. 7 is an overall configuration diagram of a vehicle control system according to the second embodiment.

A vehicle control system 1001 according to the second embodiment is a system different from the vehicle control system 1000 according to the first embodiment in that the memory (11A, 11B) further includes a transmission risk map (117A, 117B: an example of a partial risk map), a risk map comparison condition (static) (118A, 118B), and a risk map extraction program (119A, 119B) are stored. Here, a functional unit constituted by the CPU (10A, 10B) that executes the risk map extraction program (119A, 119B) is an example of an extraction unit.

The transmission risk map (117A, 117B) is a risk map transmitted according to the risk map transmission request from the other ECU, and is partial information (a set of combinations of coordinates and risk levels corresponding to these coordinates for partial coordinates of the risk map) extracted from the risk map (116A, 116B).

The risk map comparison condition (static) (118A, 118B) is a condition for extracting the transmission risk map (117A, 117B) from the risk map (116A, 116B) . The risk map comparison condition (static) (117A, 117B) may be, for example, one or more of a condition (high risk condition) in which the risk level is equal to or greater than a predetermined threshold value, a condition (close-order condition) in which a distance from the position of the host vehicle is equal to or less than a predetermined threshold value, and a condition (neighborhood comparison condition) in which the risk level is higher than those at front, rear, left, and right positions.

As the position to be extracted as the transmission risk map, the risk levels of the position corresponding to the high risk condition and the position corresponding to the close-order condition are weighted and are added for each position. The added result may be a position belonging to N number of high ranks (N is an arbitrary integer).

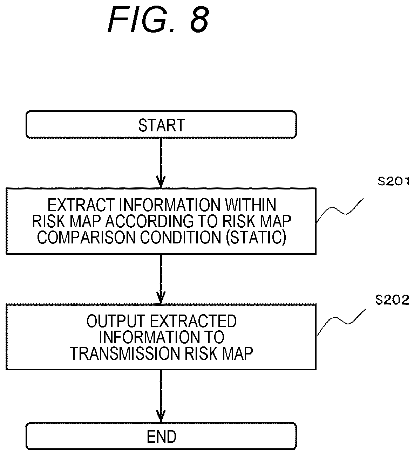

FIG. 8 is a flowchart of risk map extraction processing according to the second embodiment.

The risk map extraction processing is executed by the CPU (10A, 10B) that executes the risk map extraction program (119A, 119B). The risk map extraction processing is executed, for example, before the diagnosis processing is executed. Hereinafter, the processing of the risk map extraction program 119A of the ECU 1A will be described, but the same applies to the processing of the risk map extraction program 119B of the ECU 1B.

The risk map extraction program 119A refers to the risk map (116A, 116B), extracts information matching the risk map comparison condition (117A, 117B) (step S201), and outputs the extracted information to the transmission risk map (118A, 118B) (step S202) .

Next, diagnosis processing will be described.

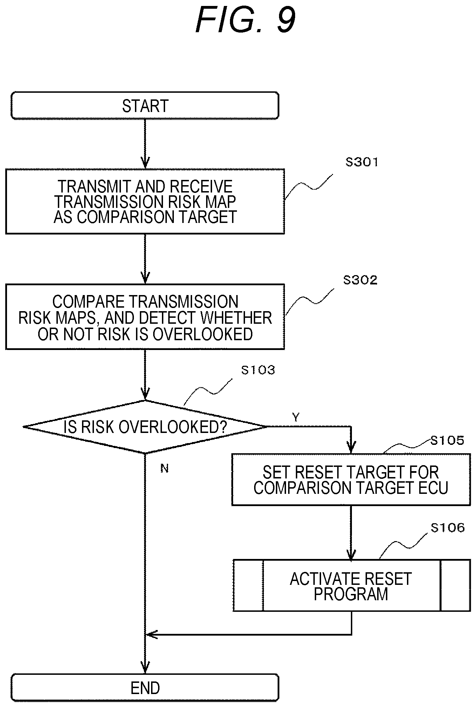

FIG. 9 is a flowchart of diagnosis processing according to the second embodiment. In FIG. 9, the same reference numerals are given to the same portions as those in the diagnosis processing according to the first embodiment, and the redundant description will be omitted.

The diagnosis (risk map comparison) program 113A transmits and receives, as a risk map that is a comparison target, the transmission risk map 117B of the other ECU (ECU 1B) (step S301). In the present embodiment, the diagnosis (risk map comparison) program 113A transmits the risk map transmission request to the ECU 1B via the in-vehicle network 14. As a result, the diagnosis (risk map comparison) program 113B of the ECU 1B transmits the transmission risk map 117B created by the ECU 1B to the diagnosis (risk map comparison) program 113A via the in-vehicle network 14.

Here, a functional unit constituted by the CPU (10A, 10B) that executes the program (113A, 113B) is an example of a transmission unit.

Subsequently, the diagnosis (risk map comparison) program 113A compares the transmission risk map 117A generated by the ECU 1A with the transmission risk map 117B which is generated by and is acquired from the ECU 1B, and detects whether or not the transmission risk map created by the ECU 1B overlooks the risk (step S302) . Subsequent processing is the same as the diagnosis processing according to the first embodiment.

According to the aforementioned diagnosis processing, since the transmission risk map 117B having a smaller data amount than the risk map 116B is transmitted via the in-vehicle network 14, a communication time can be reduced, and a load on the in-vehicle network 14 can be reduced. In the comparison processing of the risk map in step S302, since the number of positions to be compared can be reduced, a processing time can be reduced, and a processing load in the ECU can be reduced.

Next, a third embodiment will be described.

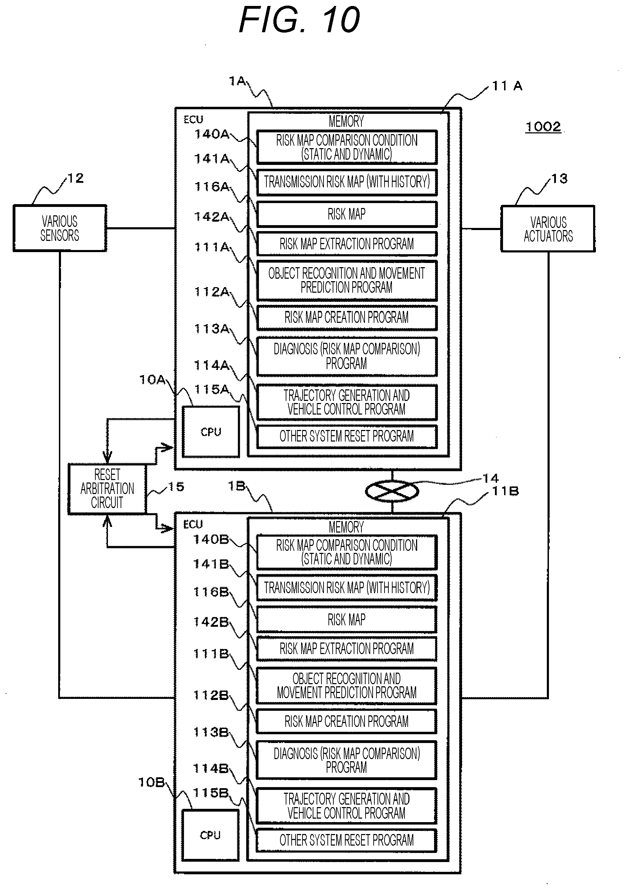

FIG. 10 is an overall configuration diagram of a vehicle control system according to the third embodiment.

A vehicle control system 1002 according to the third embodiment is a system different from the vehicle control system 1001 according to the second embodiment in that risk map comparison conditions (static and dynamic) (140A, 140B) are provided instead of the risk map comparison conditions (static) (118A, 118B), transmission risk maps (with history) (141A, 141B) are provided instead of the transmission risk maps (117A, 117B), and risk map extraction programs (142A, 142B) are provided instead of the risk map extraction programs (119A, 119B).

The risk map comparison condition (static and dynamic) (140A, 140B) is a condition for extracting the transmission risk map (with history) (141A, 142B) from the risk map (116A, 116B) . The risk map comparison condition (static and dynamic) (140A, 140B) includes the same condition as the risk map comparison condition (static) (118A, 118B), and further includes a static condition (dynamic).

The risk map comparison condition (dynamic) is a condition applied based on a history of the results detected in the risk map comparison condition (static), and includes a condition in which an approach speed (moving speed of the corresponding risk) is equal to or greater than a predetermined value and a condition in which there is a new appearance (which is not detected in the latest extraction of a predetermined number of times or less).

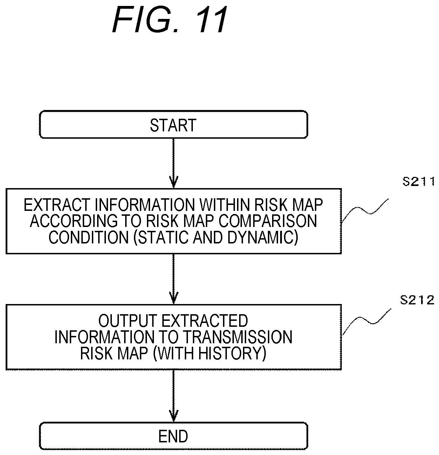

FIG. 11 is a flowchart of risk map extraction processing according to the third embodiment.

The risk map extraction processing is executed by the CPU (10A, 10B) that executes the risk map extraction program (142A, 142B). The risk map extraction processing is executed, for example, before the diagnosis processing is executed.

The risk map extraction program 142A refers to the risk map (116A, 116B), extracts information on each corresponding coordinates according to the static condition of the risk map comparison condition (dynamic and static) (140A, 140B), extracts the information on each corresponding coordinates according to the dynamic condition for a history of information of each coordinates extracted according to the static condition (step S211), and outputs the history of information extracted by the dynamic condition and the information extracted by the dynamic condition to the transmission risk map (with history) (141A, 141B) (step S212) .

According to this risk map extraction processing, the transmission risk map narrowed down to coordinates considered to be more important can be created, and the data amount of the transmission risk map can be further reduced.

Next, diagnosis processing will be described.

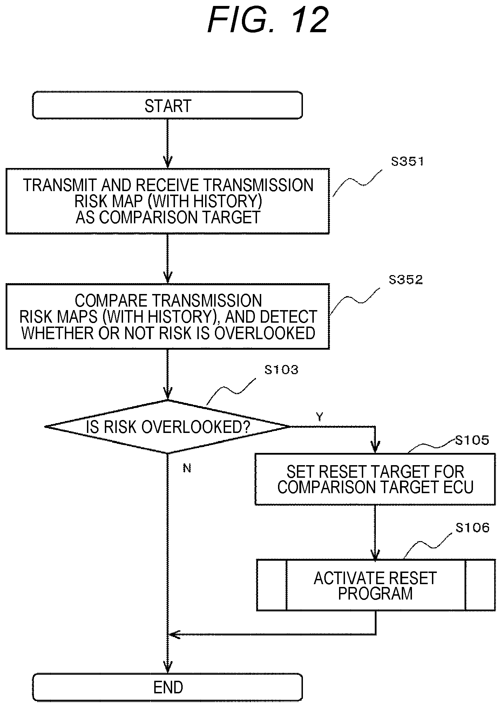

FIG. 12 is a flowchart of the diagnosis processing according to the third embodiment. In FIG. 12, the same reference numerals are given to the same portions as those in the diagnosis processing according to the first embodiment, and the redundant description will be omitted.

The diagnosis (risk map comparison) program 113A transmits and receives, as a risk map that is a comparison target, the transmission risk map detected by the dynamic condition among the transmission risk maps (with history) 141B of the other ECU (ECU 1B) (step S351) . In the present embodiment, the diagnosis (risk map comparison) program 113A transmits the risk map transmission request to the ECU 1B via the in-vehicle network 14. As a result, the diagnosis (risk map comparison) program 113B of the ECU 1B can transmit the transmission risk map detected by the dynamic condition of the transmission risk map (with history) 141B created by the ECU 1B to the diagnosis (risk map comparison) program 113A via the in-vehicle network 14.

Subsequently, the diagnosis (risk map comparison) program 113A compares the transmission risk map detected by the dynamic condition among the transmission risk maps (with history) 141A generated by the ECU 1A and the transmission risk map detected by the dynamic condition among the transmission risk maps (with history) 141B which are generated by and are acquired from the ECU 1B, and determines whether or not the risk is overlooked in the transmission risk map of the transmission risk map (with history) 141B created by the ECU 1B (step S352) . Subsequent processing is the same as the diagnosis processing according to the first embodiment.

According to the aforementioned diagnosis processing, since the transmission risk map detected by the dynamic condition among the transmission risk maps (with history) 141B having a smaller data amount than the transmission risk map 117B is transmitted via the in-vehicle network 14, a communication time can be reduced, and a load on the in-vehicle network 14 can be reduced. In the comparison processing of the risk map in step S352, since the number of positions to be compared can be reduced, a processing time can be reduced, and a processing load can be reduced.

Next, a fourth embodiment will be described.

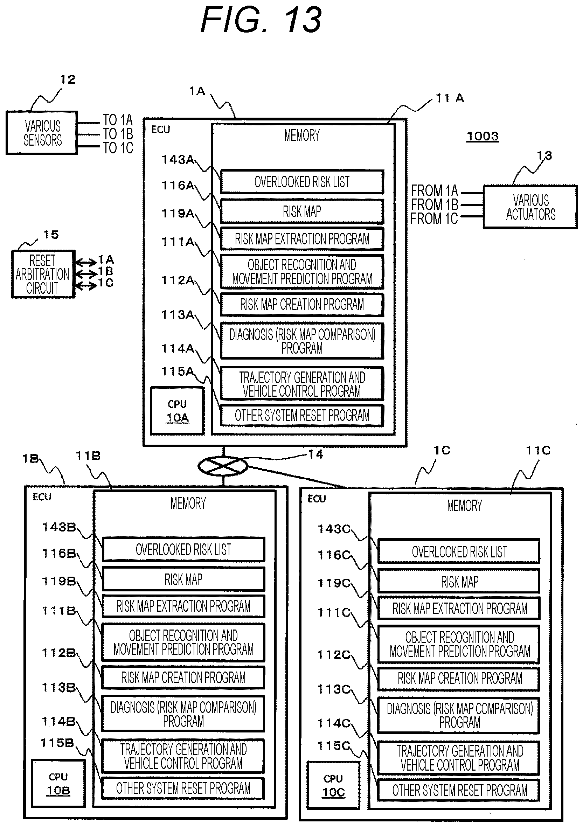

FIG. 13 is an overall configuration diagram of a vehicle control system according to the fourth embodiment.

A vehicle control system 1003 according to the fourth embodiment is a system different from the vehicle control system 1000 according to the first embodiment in that an ECU 1C is further provided, overlooked risk lists (143A, 143B, 143C) are further stored in memories (11A, 11B, 11C) of the ECU (1A, 1B, 1C), and processing of diagnosis (risk map comparison) programs (113A, 113B, 113C) are changed.

The ECU 1C has the same configuration as the ECU 1A. Hereinafter, differences from the vehicle control system 1000 according to the first embodiment will be mainly described.

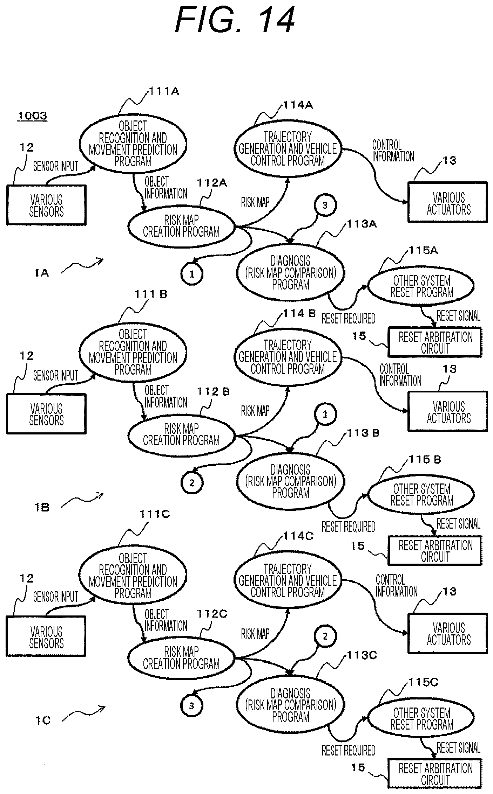

FIG. 14 is a functional configuration diagram of the vehicle control system according to the fourth embodiment.

The functional configuration of the vehicle control system 1003 according to the fourth embodiment is different from the functional configuration of the vehicle control system 1000 according to the first embodiment in that the configuration of the ECU 1C having the same configuration as the ECU 1A is further provided. In the vehicle control system 1003, the risk map 116A created by the risk map creation program 112A of the ECU 1A is transmitted to the diagnosis (risk map comparison) program 113B of the ECU 1B, the risk map 116B created by the risk map creation program 112B of the ECU 1B is transmitted to the diagnosis (risk map comparison) program 113C of the ECU 1C, and the risk map 116C created by the risk map creation program 112C of the ECU 1C is transmitted to the diagnosis (risk map comparison) program 113A of the ECU 1A.

Next, a method of deciding the overlooked risk list and the abnormal ECU will be described.

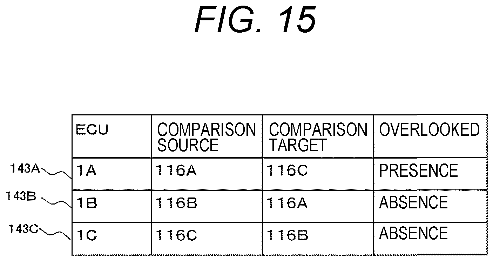

FIG. 15 is a diagram for describing the method of deciding the overlooked risk list and the abnormal ECU according to the fourth embodiment.

The overlooked risk lists 143A, 143B, and 143C correspond to rows illustrated in FIG. 15, respectively, and include information on the diagnosed ECU, information on the risk map as a comparison source, information on the risk map as a comparison target, and information on a determination result of the overlooking.

Here, the diagnosis (risk map comparison) program 113A of the ECU 1A compares the risk map of the ECU 1A with the risk map of the ECU 1C, and determines whether or not the risk is overlooked. The diagnosis (risk map comparison) program 113A of the ECU 1A acquires overlooked risk lists which are determination results of the overlooked risk from the other ECUs 1B and 1C. Subsequently, the diagnosis (risk map comparison) program 113A of the ECU 1A decides the abnormal ECU (ECU to be reset) based on the own determination result and the overlooked risk lists from the other ECUs 1B and 1C.

For example, as illustrated in FIG. 15, when only the ECU 1A determines that the ECU (ECU 1C) as the comparison target overlooks the risk and the other ECUs 1B and 1C determine that the ECU as the comparison target does not overlook the risk, the diagnosis (risk map comparison) program 113A of the ECU 1A can determine that the ECU 1A as a minority is abnormal by determining that only the ECU 1A overlooks the risk and based on the own determination result and the overlooked risk lists from the other ECUs 1B and 1C, only the diagnosis (risk map comparison) program 113B of the ECU 1B can determines that the ECU 1A as the minority is abnormal by determining that only the ECU 1A overlooks the risk based on the own determination result and the overlooked risk lists from the other ECUs 1A and 1C, and the diagnosis (risk map comparison) program 113C of the ECU 1C can determine that the ECU 1A as the minority is abnormal by determining that only the ECU 1A overlooks the risk based on the own determination result and the overlooked risk lists from the other ECUs 1A and 1B. When the number of ECUs is four or more, the ECU may acquire the overlooked risk lists of the other ECUs. When the number of ECUs that report the overlooking of the risk is equal to or less than a predetermined number based on the own determination result and the overlooked risk lists of the other ECUs, the ECUs that report the overlooking of the risk may be set as reset targets.

Next, diagnosis processing will be described.

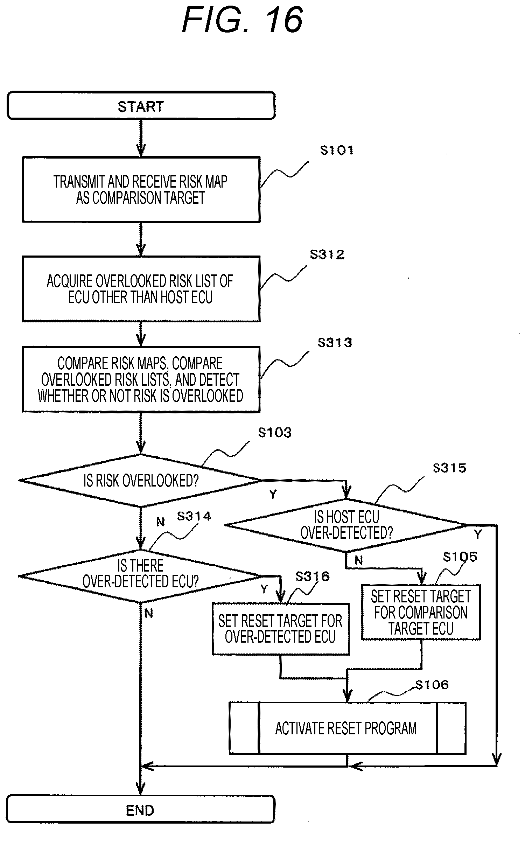

FIG. 16 is a flowchart of the diagnosis processing according to the fourth embodiment. In FIG. 16, the same reference numerals are given to the same portions as those in the diagnosis processing according to the first embodiment, and the redundant description will be omitted. FIG. 16 illustrates the processing of the ECU 1A, but the same processing is executed in the ECU 1B and the ECU 1C.

The diagnosis (risk map comparison) program 113A acquires the risk list of the other ECU (ECU 1B) (step S312). In the present embodiment, the diagnosis (risk map comparison) program 113A transmits an overlooked risk list transmission request to the other ECUs (ECU 1B, ECU 1C) via the in-vehicle network 14. As a result, the diagnosis (risk map comparison) programs (113B, 113C) of the other ECUs transmit the overlooked risk lists created by the ECUs (1B, 1C) via the in-vehicle network 14.

Subsequently, the diagnosis (risk map comparison) program 113A compares the risk map 116A generated by the ECU 1A with the risk map 116C which is generated by and is acquired from the ECU 1C, detects whether or not there is the risk overlooked in the risk map 116C created by the ECU 1C, refers to the detection result and the contents of the acquired overlooked risk list, and detects the ECU that overlooks the risk (step S313) .

When it is determined in step S103 that the risk is overlooked (S103: Y), the diagnosis (risk map comparison) program 113A determines whether or not the own ECU is over-detected (the number of times of determination the risk is overlooked is the minority) (step S315) . When it is determined that the own ECU is over-detected (step S315: Y), the processing ends without setting the other ECU as the reset target, and when it is determined that the own ECU is not over-detected (step S315: N), the processing proceeds to step S105, and the other ECU that overlooks the risk is reset.

Meanwhile, when it is determined in step S103 that the risk is not overlooked (S103: N), the diagnosis (risk map comparison) program 113A determines whether or not there is the over-detected other ECU (the number of times of determination the risk is overlooked is the minority (step S314). When it is determined that there is the over-detected other ECU (step S314: Y), the diagnosis (risk map comparison) program 113A generates the reset request in which the over-detected other ECU is set as the reset target (step S316), and the processing proceeds to step S106. Meanwhile, when it is determined that there is no over-detected other ECU (step S314: N), the processing ends without setting the other ECU as the reset target.

According to this diagnosis processing, the ECU having the risk map creation program that performs over-detection among the plurality of ECUs is the reset target.

Next, a fifth embodiment will be described.

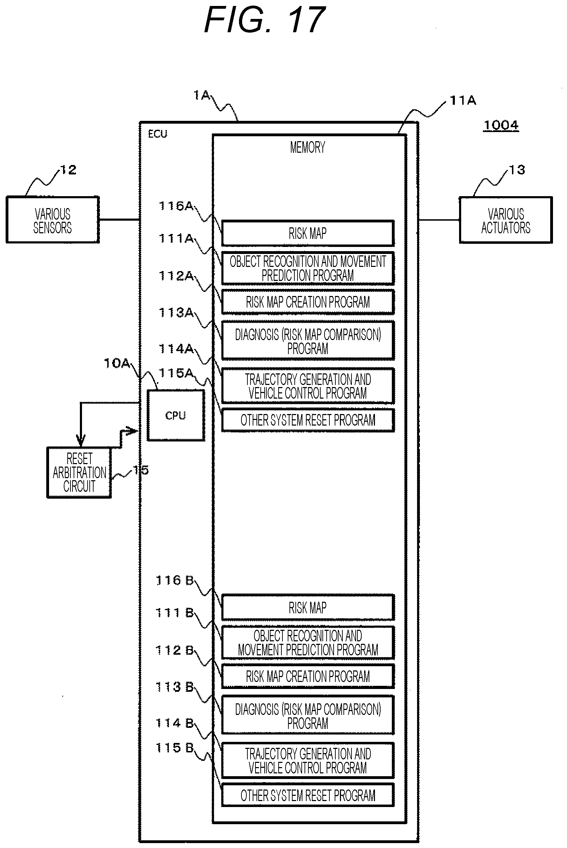

FIG. 17 is an overall configuration diagram of a vehicle control system according to the fifth embodiment.

The vehicle control system 1004 according to the fifth embodiment is a vehicle control system in which the functions executed by the two ECUs 1A and 1B in the vehicle control system 1000 according to the first embodiment are realized by one ECU 1A. That is, the memory 11A of the ECU 1A stores the object recognition and movement prediction programs 111A and 111B, the risk map creation programs 112A and 112B, the diagnosis (risk map comparison) programs 113A and 113B, the trajectory generation and vehicle control programs 114A and 114B, and the other system reset programs 115A and 115B, and the risk maps 116A and 116B. When the reset request output from the diagnosis (risk map comparison) program (113A, 113B) is received, the other system reset program 115A or 115B according to the present embodiment outputs the reset signal for resetting each program of the other systems to the reset arbitration circuit 15. The reset arbitration circuit 15 performs control for resetting (reactivating) each program of the other systems according to the reset signal.

Next, a system configuration diagram of the vehicle control system 1004 will be described.

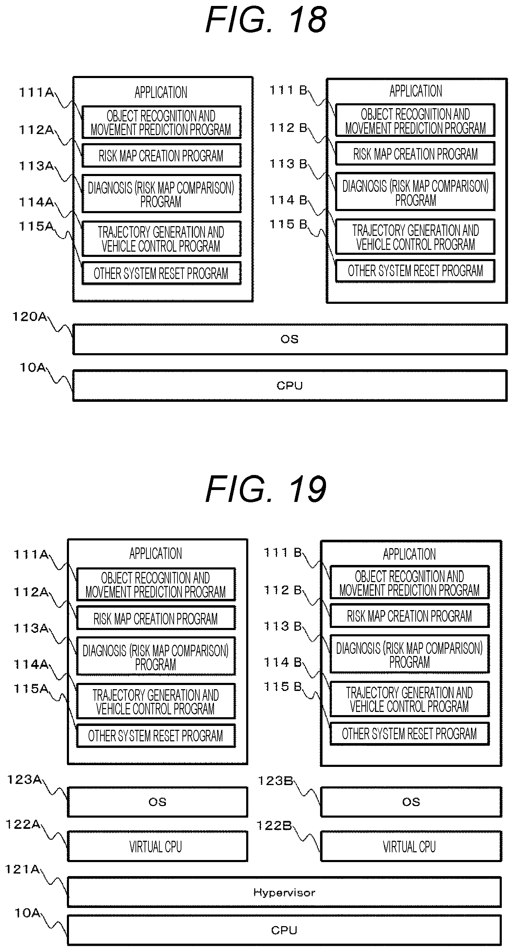

FIG. 18 is a first system configuration diagram of the vehicle control system according to the fifth embodiment. FIG. 19 is a second system configuration diagram of the vehicle control system according to the fifth embodiment.

As illustrated in FIG. 18, the vehicle control system 1004 can have a system configuration in which an OS 120A operates on the CPU 10A and a first control system in which applications of the object recognition and movement prediction program 111A, the risk map creation program 112A, the diagnosis (risk map comparison) program 113A, the trajectory generation and vehicle control program 114A, and the other system reset program 115A operate and a second control system in which applications of the object recognition and movement prediction program 111B, the risk map creation program 112B, the diagnosis (risk map comparison) program 113B, the trajectory generation and vehicle control program 114B, and the other system reset program 115B operate are constituted on the OS 120A.

As illustrated in FIG. 19, the vehicle control system 1004 can have a system configuration in which virtual CPUs 122A and 122B are constructed on a hypervisor 121A that enables the realization of a virtual machine by operating the hypervisor 121A on the CPU 10A, a first control system is constituted by operating an OS 123A on the virtual CPU 122A and operating the applications of the object recognition and movement prediction program 111A, the risk map creation program 112A, the diagnosis (risk map comparison) program 113A, the trajectory generation and vehicle control program 114A, and the other system reset program 115A on the OS 123A, and a second control system is constituted by operating the OS 123B on the virtual CPU 122B and operating the applications of the object recognition and movement prediction program 111B, the risk map creation program 112B, the diagnosis (risk map comparison) program 113B, the trajectory generation and vehicle control program 114B, and the other system reset program 115B on the OS 123B.

According to the vehicle control system 1004 according to the present embodiment, it is possible to appropriately detect that the abnormality (for example, the overlooking of the risk) occurs in one of a plurality of systems operating on one ECU, and it is possible to appropriately reset this system.

Next, a sixth embodiment will be described.

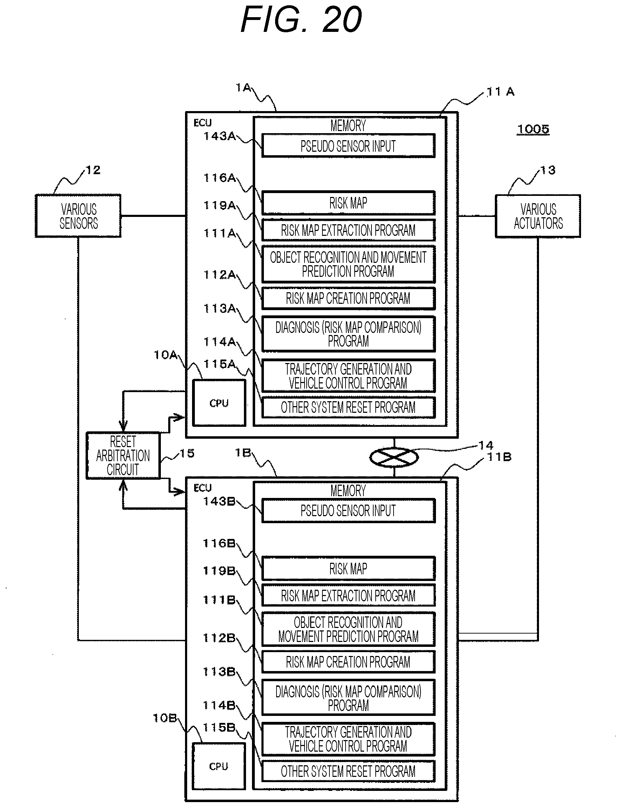

FIG. 20 is an overall configuration diagram of a vehicle control system according to the sixth embodiment.

A vehicle control system 1005 according to the sixth embodiment is a vehicle control system different from the vehicle control system 1000 according to the first embodiment in that the memory (11A, 11B: an example of a pseudo sensor information storage unit) further stores a pseudo sensor input (143A, 143B: pseudo sensor information) and the program such as the object recognition and movement prediction program (111A, 111B) is executed by using the pseudo sensor input. In the present embodiment, diagnosis processing using the pseudo sensor input is executed, for example, when the vehicle starts or when the vehicle stops.

The pseudo sensor input (143A, 143B) is a pseudo sensor input (sensor information) assumed to be input from the various sensors 12 when the vehicle is in a certain situation.

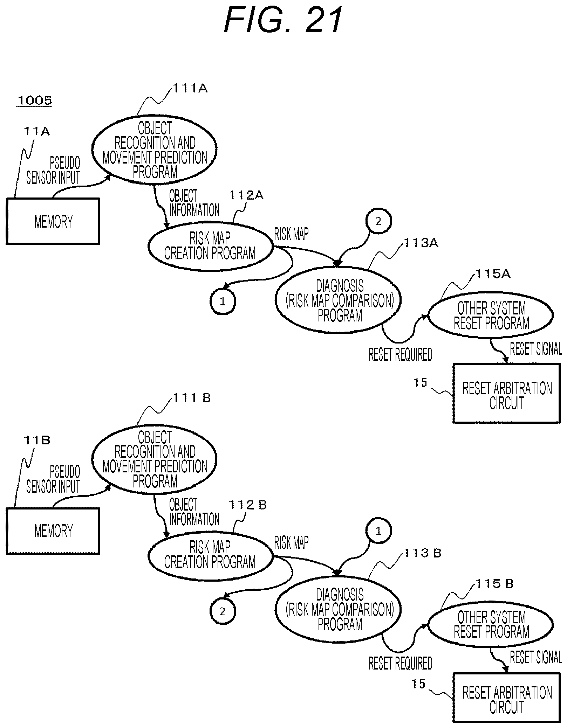

FIG. 21 is a functional configuration diagram of the vehicle control system according to the sixth embodiment. In FIG. 21, a functional configuration is described in a Data Flow Diagram format.

The object recognition and movement prediction program (111A, 111B) (actually, a functional unit constituted by the CPU (10A, 10B) that executes the object recognition and movement prediction program) receives the pseudo sensor input of the memory (11A, 11B), recognizes the external object such as the preceding vehicle in a situation indicated by a pseudo sensor, predicts the movement of the object, and outputs, as the object information, the predicted movement of the object when the diagnosis processing using the pseudo sensor input is executed.

The risk map creation program (112A, 112B) (actually, a functional unit constituted by the CPU (10A, 10B) that executes the risk map creation program) creates the risk map (116A, 116B) by using, as the input, the object information output from the object recognition and movement prediction program (111A, 111B), outputs the risk map to the diagnosis (risk map comparison) program (113A, 113B) of the ECU (host ECU) to which this risk map creation program belongs, and outputs the risk information to the diagnosis (risk map comparison) program (113B, 113A) of the other ECU.

The diagnosis (risk map comparison) program (113A, 113B) (actually, a functional unit constituted by the CPU (10A, 10B) that executes the diagnosis (risk map comparison) program) transmits the risk map transmission request for requesting the transmission of the risk map created by the other ECU to the other ECU via the in-vehicle network 14. When the risk map transmission request is received from the other ECU via the in-vehicle network 14, the diagnosis (risk map comparison) program (113A, 113B) transmits the risk map of the host ECU (10A) to the other ECU (10B) as the risk map transmission request source. The diagnosis (risk map comparison) program (113A, 113B) compares the risk map based on the pseudo sensor input output from the diagnosis (risk map comparison) program of the host ECU with the risk map based on the pseudo sensor input acquired from the diagnosis (risk map comparison) program of the other ECU, detects whether or not the risk is not overlooked, and outputs the reset request indicating it is necessary to reset the other ECU (other system) to the other system reset program (115A, 115B) when the risk is overlooked.

According to the vehicle control system 1005 according to the present embodiment, it is possible to appropriately detect the abnormality of the risk map when the vehicle starts or when the vehicle stops. Since the risk map is created based on the pseudo sensor input, there is no influence from the abnormality in the various sensors 12.

Next, a seventh embodiment will be described.

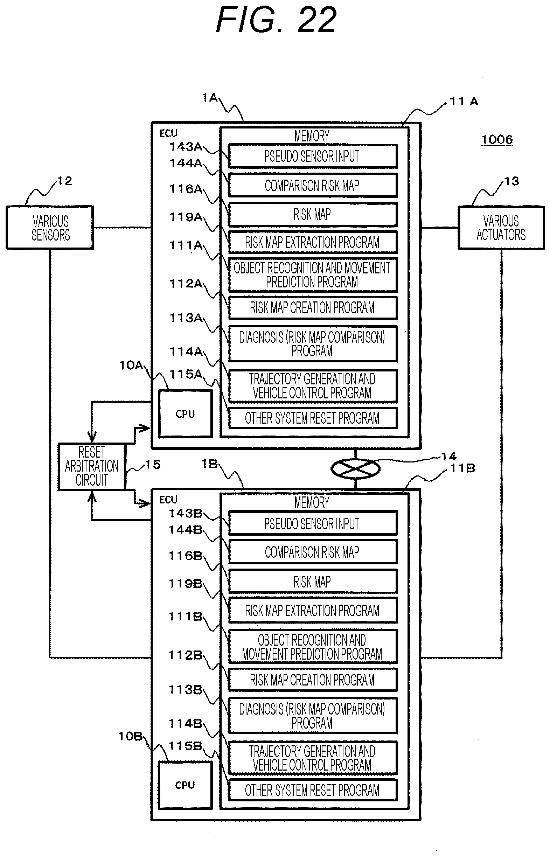

FIG. 22 is an overall configuration diagram of a vehicle control system according to the seventh embodiment.

A vehicle control system 1006 according to the seventh embodiment is a vehicle control system different from the vehicle control system 1005 according to the sixth embodiment in that the memory (11A, 11B) further stores a comparison risk map (144A, 144B) and the diagnosis (risk map comparison) program (113A, 113B) performs diagnosis by using the comparison risk map.

The comparison risk map (144A, 144B) is a risk map to be created when there is a pseudo sensor input.

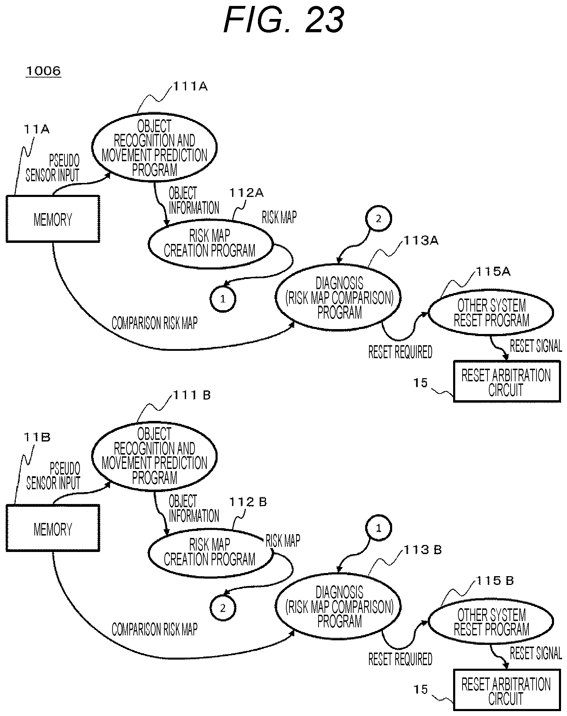

FIG. 23 is a functional configuration diagram of the vehicle control system according to the seventh embodiment. FIG. 23 illustrates a functional configuration in a Data Flow Diagram format.

The risk map creation program (112A, 112B) (actually, a functional unit constituted by the CPU (10A, 10B) that executes the risk map creation program) creates the risk map (116A, 116B) by using, as the input, the object information output from the object recognition and movement prediction program (111A, 111B), and outputs the risk map to the diagnosis (risk map comparison) program (113B, 113A) of the other ECU.

The diagnosis (risk map comparison) program (113A, 113B) (actually, a functional unit constituted by the CPU (10A, 10B) that executes the diagnosis (risk map comparison) program) transmits the risk map transmission request for requesting the transmission of the risk map created by the other ECU to the other ECU via the in-vehicle network 14. When the risk map transmission request is received from the other ECU via the in-vehicle network 14, the diagnosis (risk map comparison) program (113A, 113B) transmits the risk map of the host ECU (10A) to the other ECU (10B) as the risk map transmission request source. The diagnosis (risk map comparison) program (113A, 113B) compares the comparison risk map (144A, 144B) of the memory (11A, 11B) with the risk map based on the pseudo sensor input acquired from the diagnosis (risk map comparison) program (113B, 113A) of the other ECU, detects whether or not the risk is not overlooked, and outputs the reset request indicating that it is necessary to reset the other ECU (other system) to the other system reset program (115A, 115B) when the risk is overlooked.

Next, diagnosis processing will be described.

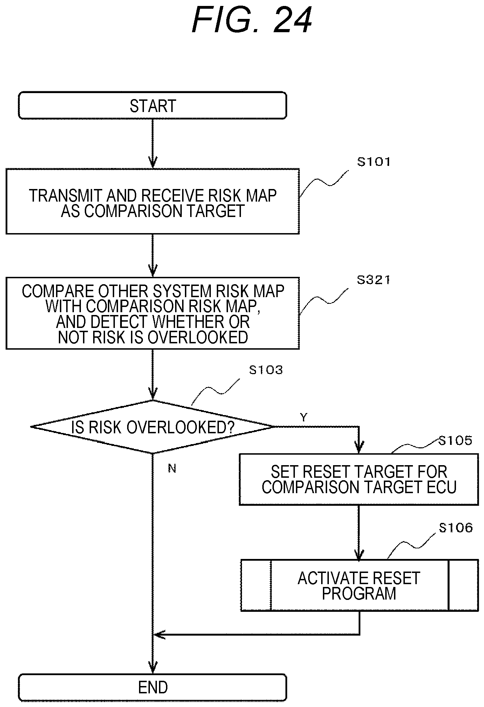

FIG. 24 is a flowchart of the diagnosis processing according to the seventh embodiment. In FIG. 24, the same reference numerals are given to the same portions as those in the diagnosis processing according to the first embodiment, and the redundant description will be omitted.

The diagnosis (risk map comparison) program 113A compares the comparison risk map 144A of the memory 11A with the risk map 116B which is generated by and is acquired from the ECU 1B, and detects whether or not the risk is overlooked in the risk map created by the ECU 1B (step S321). Subsequent processing is the same as the diagnosis processing according to the first embodiment.

According to the aforementioned diagnosis processing, since an accurate comparison risk map corresponding to the pseudo sensor input stored in advance is compared with the risk map acquired from the other ECU, the reliability of the detection of the abnormality of the risk map can be increased.

The present invention is not limited to the aforementioned embodiments, and can be appropriately modified and implemented within the scope of the appended claims.

For example, any of the plurality of aforementioned embodiments may be combined.

For example, although it has been described in the sixth embodiment or the seventh embodiment that the created risk map is transmitted to the other ECU, for example, the transmission risk map may be transmitted as illustrated in the second embodiment or the third embodiment.

Although it has been described in the aforementioned embodiments that the processing for resetting the ECU is performed as the abnormality handling processing, the present invention is not limited thereto. For example, processing for stopping the operation of the ECU may be performed.

In the aforementioned embodiments, a part or all of the processing performed by the CPU may be performed by a dedicated hardware circuit. The programs in the aforementioned embodiments may be installed from a program source . The program source may be a program distribution server or a storage medium (for example, a portable storage medium).

### Reference Signs List

1000, 1001, 1002, 1003, 1004, 1005, 1006 vehicle control system 1A, 1B, 1C ECU
10A, 10B, 10C CPU
11A, 11B, 11C memory
112A, 112B, 112C risk map creation program
113A, 113B, 113C diagnosis (risk map comparison) program
115A, 115B, 115C other system reset program
119A, 119B risk map extraction program

## Claims

1. An abnormality diagnosis system (1000, 1001, 1002, 1003, 1004, 1005, 1006) that includes a risk information generation unit (112A, 112B) which generates risk information related to a risk which is used for automatic driving control of a vehicle when the vehicle moves based on sensor information related to an object around the vehicle, the system (1000, 1001, 1002, 1003, 1004, 1005, 1006) comprising:
a plurality of the risk information generation units (112A, 112B); and
a diagnosis unit (113A, 113B, 113C) that diagnoses whether or not an abnormality occurs in the generated risk information based on a plurality of pieces of risk information generated of the plurality of risk information generation units (112A, 112B).

2. The abnormality diagnosis system (1000, 1001, 1002, 1003, 1004, 1005, 1006) according to claim 1,
wherein the risk information generation unit (112A, 112B) generates, as the risk information, a risk map including a correspondence between a plurality of positions around the vehicle and risk levels at the positions.

3. The abnormality diagnosis system (1000, 1001, 1002, 1003, 1004, 1005, 1006) according to claim 2, further comprising:
a plurality of the diagnosis units (113A, 113B, 113C) that is provided so as to correspond to the plurality of risk information generation units (112A, 112B);
a plurality of extraction units that is provided so as to correspond to the plurality of risk information generation units (112A, 112B), and each extracts a partial risk map as a part of the risk map generated by the corresponding risk information generation unit (112A, 112B); and
a plurality of transmission units that is provided so as to correspond to the plurality of extraction units, and each transmits the partial risk map extracted by the corresponding extraction unit to the diagnosis unit (113A, 113B, 113C) corresponding to another risk information generation unit (112A, 112B),
wherein each diagnosis unit (113A, 113B, 113C) diagnoses an abnormality of the risk map by comparing the partial risk map transmitted from the transmission unit with the partial risk map corresponding to the risk map generated by the corresponding risk information generation unit (112A, 112B) .

4. The abnormality diagnosis system (1000, 1001, 1002, 1003, 1004, 1005, 1006) according to claim 3,
wherein the extraction unit specifies a position of a part of the risk map that satisfies a predetermined condition, and extracts a partial risk map including the specified position and the risk level at the specified position.

5. The abnormality diagnosis system (1000, 1001, 1002, 1003, 1004, 1005, 1006) according to any one of claims 1 to 4,
wherein a first risk information generation unit (112A, 112B) and a second risk information generation unit (112A, 112B) of the plurality of risk information generation units (112A, 112B) generate the risk information based on sensor information including information detected by the same type of different individual sensors.

6. The abnormality diagnosis system (1000, 1001, 1002, 1003, 1004, 1005, 1006) according to any one of claims 1 to 5,
wherein the diagnosis unit (113A, 113B, 113C) diagnoses that the abnormality occurs based on the risk information having a low risk.

7. The abnormality diagnosis system (1000, 1001, 1002, 1003, 1004, 1005, 1006) according to any one of claims 1 to 6, further comprising:
an abnormality handling processing unit (115A, 115B) that executes predetermined processing for handling the abnormality on the risk information generation unit (112A, 112B) that generates the risk information for which the occurrence of the abnormality is diagnosed by the diagnosis unit (113A, 113B, 113C).

8. The abnormality diagnosis system (1000, 1001, 1002, 1003, 1004, 1005, 1006) according to any one of claims 1 to 7,
wherein the abnormality diagnosis system (1000, 1001, 1002, 1003, 1004, 1005, 1006) includes a plurality of electronic control units, and
the plurality of risk information generation units (112A, 112B)is provided in the electronic control units different from each other.

9. The abnormality diagnosis system (1000, 1001, 1002, 1003, 1004, 1005, 1006) according to any one of claims 1 to 8, further comprising:
a pseudo sensor information storage unit that stores, as the sensor information, pseudo sensor information which is sensor information assumed to be output from a sensor when the object around the vehicle is in a predetermined state,
wherein each risk information generation unit (112A, 112B) generates the risk information based on the pseudo sensor information, and
the diagnosis unit (113A, 113B, 113C) diagnoses the abnormality of the risk information based on the risk information generated based on the pseudo sensor information.

10. An abnormality diagnosis method of an abnormality diagnosis system that generates risk information related to a risk which is used for automatic driving control of a vehicle when the vehicle moves based on sensor information related to an object around the vehicle, the method comprising:
generating a plurality of pieces of risk information based on the sensor information; and
diagnosing whether or not an abnormality occurs in the generated risk information based on the plurality of pieces of generated risk information.

## Patentansprüche

1. Anomalie-Diagnosesystem (1000, 1001, 1002, 1003, 1004, 1005, 1006), das eine Risikoinformationen-Erstellungseinheit (112A, 112B) umfasst, die Risikoinformationen in Bezug auf ein Risiko erstellt, das zur automatischen Lenksteuerung eines Fahrzeugs verwendet wird, wenn sich das Fahrzeug basierend auf Sensorinformationen bewegt, die auf ein Objekt rund um das Fahrzeug bezogen sind, wobei das System (1000, 1001, 1002, 1003, 1004, 1005, 1006) Folgendes umfasst:
eine Vielzahl der Risikoinformationen-Erstellungseinheiten (112A, 112B); und
eine Diagnoseeinheit (113A, 113B, 113C), die basierend auf einer Vielzahl von Elementen von Risikoinformationen, die aus der Vielzahl von Risikoinformationen-Erstellungseinheiten (112A, 112B) erstellt wurden, untersucht, ob eine Anomalie in den erstellten Risikoinformationen vorliegt oder nicht.

2. Anomalie-Diagnosesystem (1000, 1001, 1002, 1003, 1004, 1005, 1006) nach Anspruch 1,
wobei die Risikoinformationen-Erstellungseinheit (112A, 112B) als die Risikoinformationen eine Risikokarte einschließlich einer Korrespondenz zwischen einer Vielzahl von Positionen rund um das Fahrzeug und Risikostufen an den Positionen erstellt.

3. Anomalie-Diagnosesystem (1000, 1001, 1002, 1003, 1004, 1005, 1006) nach Anspruch 2, das ferner Folgendes umfasst:
eine Vielzahl der Diagnoseeinheiten (113A, 113B, 113C), die so bereitgestellt ist, um der Vielzahl von Risikoinformationen-Erstellungseinheiten (112A, 112B) zu entsprechen;
eine Vielzahl von Extraktionseinheiten, die so bereitgestellt ist, um der Vielzahl von Risikoinformationen-Erstellungseinheiten (112A, 112B) zu entsprechen, und die jeweils eine partielle Risikokarte als einen Teil der Risikokarte extrahiert, die durch die entsprechende Risikoinformationen-Erstellungseinheit (112A, 112B) erstellt wurde; und
eine Vielzahl von Übertragungseinheiten, die so bereitgestellt ist, um der Vielzahl von Extraktionseinheiten zu entsprechen, und die jeweils die partielle Risikokarte, die durch die entsprechende Extraktionseinheit extrahiert wurde, an die Diagnoseeinheit (113A, 113B, 113C) überträgt, die einer weiteren Risikoinformationen-Erstellungseinheit (112A, 112B) entspricht,
wobei jede Diagnoseeinheit (113A, 113B, 113C) eine Anomalie der Risikokarte durch Vergleichen der partiellen Risikokarte, die von der Übertragungseinheit übertragen wurde, mit der partiellen Risikokarte, der der Risikokarte entspricht, die durch die entsprechende Risikoinformationen-Erstellungseinheit (112A, 112B) erstellt wurde, untersucht.

4. Anomalie-Diagnosesystem (1000, 1001, 1002, 1003, 1004, 1005, 1006) nach Anspruch 3,
wobei die Extraktionseinheit eine Position eines Teils der Risikokarte angibt, die eine vorbestimmte Bedingung erfüllt, und eine partielle Risikokarte einschließlich der angegebenen Position und der Risikostufe an der angegebenen Position extrahiert.

5. Anomalie-Diagnosesystem (1000, 1001, 1002, 1003, 1004, 1005, 1006) nach einem der Ansprüche 1 bis 4,
wobei eine erste Risikoinformationen-Erstellungseinheit (112A, 112B) und eine zweite Risikoinformationen-Erstellungseinheit (112A, 112B) aus der Vielzahl von Risikoinformationen-Erstellungseinheiten (112A, 112B) die Risikoinformationen basierend auf Sensorinformationen einschließlich Informationen, die durch denselben Typ aus verschiedenen Einzelsensoren detektiert werden, erstellen.

6. Anomalie-Diagnosesystem (1000, 1001, 1002, 1003, 1004, 1005, 1006) nach einem der Ansprüche 1 bis 5,
wobei die Diagnoseeinheit (113A, 113B, 113C) untersucht, dass die Anomalie basierend auf den Risikoinformationen mit geringem Risiko auftritt.

7. Anomalie-Diagnosesystem (1000, 1001, 1002, 1003, 1004, 1005, 1006) nach einem der Ansprüche 1 bis 6, das ferner Folgendes umfasst:
eine Anomalie-Handhabungsverarbeitungseinheit (115A, 115B), die eine vorbestimmte Verarbeitung zur Handhabung der Anomalie in der Risikoinformationen-Erstellungseinheit (112A, 112B), die die Risikoinformationen erstellt, für die das Auftreten der Anomalie durch die Diagnoseeinheit (113A, 113B, 113C) untersucht wird, ausführt.

8. Anomalie-Diagnosesystem (1000, 1001, 1002, 1003, 1004, 1005, 1006) nach einem der Ansprüche 1 bis 7,
wobei das Anomalie-Diagnosesystem (1000, 1001, 1002, 1003, 1004, 1005, 1006) eine Vielzahl von elektronischen Steuereinheiten umfasst und
die Vielzahl von Risikoinformationen-Erstellungseinheiten (112A, 112B) in den elektronischen Steuereinheiten bereitgestellt ist, die sich voneinander unterscheiden.

9. Anomalie-Diagnosesystem (1000, 1001, 1002, 1003, 1004, 1005, 1006) nach einem der Ansprüche 1 bis 8, das ferner Folgendes umfasst:
eine Pseudosensorinformationsspeichereinheit, die als die Sensorinformationen Pseudosensorinformationen speichert, die Sensorinformationen sind, von denen angenommen wird, dass sie von einem Sensor ausgegeben werden, wenn sich das Objekt rund um das Fahrzeug in einem vorbestimmten Zustand befindet,
wobei jede Risikoinformationen-Erstellungseinheit (112A, 112B) die Risikoinformationen basierend auf den Pseudosensorinformationen erstellt und
wobei die Diagnoseeinheit (113A, 113B, 113C) die Anomalie der Risikoinformationen basierend auf den Risikoinformationen untersucht, die basierend auf den Pseudosensorinformationen erstellt wurden.

10. Anomalie-Diagnoseverfahren eines Anomalie-Diagnosesystems, das Risikoinformationen in Bezug auf ein Risiko erstellt, das für die automatische Lenksteuerung eines Fahrzeugs verwendet wird, wenn sich das Fahrzeug basierend auf Sensorinformationen bewegt, die ein Objekt rund um das Fahrzeug betreffen, wobei das Verfahren Folgendes umfasst:
Erstellen einer Vielzahl von Elementen von Risikoinformationen basierend auf den Sensorinformationen; und
Untersuchen, ob eine Anomalie in den erstellten Risikoinformationen basierend auf der Vielzahl von Elementen von erstellten Risikoinformationen auftritt oder nicht.

## Revendications

1. Système de diagnostic d'anomalie (1000, 1001, 1002, 1003, 1004, 1005, 1006) qui inclut une unité de génération d'informations de risque (112A, 112B) qui génère des informations de risque relatives à un risque qui est utilisé pour une commande de conduite automatique d'un véhicule lorsque le véhicule se déplace sur la base d'informations de capteur relatives sur un objet autour du véhicule, le système (1000, 1001, 1002, 1003, 1004, 1005, 1006) comprenant :
une pluralité d'unités de génération d'informations de risque (112A, 112B) ; et
une unité de diagnostic (113A, 113B, 113C) qui diagnostique si une anomalie survient ou non dans les informations de risque générées sur la base d'une pluralité d'éléments d'informations de risque générées de la pluralité d'unités de génération d'informations de risque (112A, 112B).

2. Système de diagnostic d'anomalie (1000, 1001, 1002, 1003, 1004, 1005, 1006) selon la revendication 1,
dans lequel l'unité de génération d'informations de risque (112A, 112B) génère, en tant qu'informations de risque, une carte de risques incluant une correspondance entre une pluralité de positions autour du véhicule et des niveaux du risque au niveau des positions.

3. Système de diagnostic d'anomalie (1000, 1001, 1002, 1003, 1004, 1005, 1006) selon la revendication 2, comprenant en outre :
une pluralité d'unités de diagnostic (113A, 113B, 113C) qui est prévue de manière à correspondre à la pluralité d'unités de génération d'informations de risque (112A, 112B) ;
une pluralité d'unités d'extraction qui est prévue de manière à correspondre à la pluralité d'unités de génération d'informations de risque (112A, 112B), et chacune extrait une carte de risques partielle en tant que partie de la carte de risques générée par l'unité de génération d'informations de risque correspondante (112A, 112B) ; et
une pluralité d'unités de transmission qui est prévue de manière à correspondre à la pluralité d'unités d'extraction, et chacune transmet la carte de risques partielle extraite par l'unité d'extraction correspondante à l'unité de diagnostic (113A, 113B, 113C) correspondant à une autre unité de génération d'informations de risque (112A, 112B),
dans lequel chaque unité de diagnostic (113A, 113B, 113C) diagnostique une anomalie de la carte de risques en comparant la carte de risques partielle transmise par l'unité de transmission avec la carte de risques partielle correspondant à la carte de risques générée par l'unité de génération d'informations de risque correspondante (112A, 112B) .

4. Système de diagnostic d'anomalie (1000, 1001, 1002, 1003, 1004, 1005, 1006) selon la revendication 3,
dans lequel l'unité d'extraction spécifie une position d'une partie de la carte de risques qui satisfait une condition prédéterminée, et extrait une carte de risques partielle incluant la position spécifiée et le niveau de risque au niveau de la position spécifiée.

5. Système de diagnostic d'anomalie (1000, 1001, 1002, 1003, 1004, 1005, 1006) selon l'une quelconque des revendications 1 à 4,
dans lequel une première unité de génération d'informations de risque (112A, 112B) et une seconde unité de génération d'informations de risque (112A, 112B) de la pluralité d'unités de génération d'informations de risque (112A, 112B) génèrent les informations de risque sur la base d'informations de capteur incluant des informations détectées par le même type de capteurs individuels différents.

6. Système de diagnostic d'anomalie (1000, 1001, 1002, 1003, 1004, 1005, 1006) selon l'une quelconque des revendications 1 à 5,
dans lequel l'unité de diagnostic (113A, 113B, 113C) diagnostique que l'anomalie survient sur la base des informations de risque présentant un faible risque.

7. Système de diagnostic d'anomalie (1000, 1001, 1002, 1003, 1004, 1005, 1006) selon l'une quelconque des revendications 1 à 6, comprenant en outre :
une unité de traitement de manipulation d'anomalie (115A, 115B) qui exécute un traitement prédéterminé pour manipuler l'anomalie sur l'unité de génération d'informations de risque (112A, 112B) qui génère les informations de risque pour lesquelles l'occurrence de l'anomalie est diagnostiquée par l'unité de diagnostic (113A, 113B, 113C).

8. Système de diagnostic d'anomalie (1000, 1001, 1002, 1003, 1004, 1005, 1006) selon l'une quelconque des revendications 1 à 7,
dans lequel le système de diagnostic d'anomalie (1000, 1001, 1002, 1003, 1004, 1005, 1006) inclut une pluralité d'unités de commande électroniques, et
la pluralité d'unités de génération d'informations de risque (112A, 112B) est prévue dans les unités de commande électroniques différentes les unes des autres.

9. Système de diagnostic d'anomalie (1000, 1001, 1002, 1003, 1004, 1005, 1006) selon l'une quelconque des revendications 1 à 8, comprenant en outre :
une unité de stockage de pseudo-informations de capteur qui stocke, en tant qu'informations de capteur, des pseudo-informations de capteur qui sont des informations de capteur supposées être délivrées en sortie par un capteur lorsque l'objet autour du véhicule est dans un état prédéterminé,
dans lequel chaque unité de génération d'informations de risque (112A, 112B) génère les informations de risque sur la base des pseudo-informations de capteur, et
l'unité de diagnostic (113A, 113B, 113C) diagnostique l'anomalie des informations de risque sur la base des informations de risque générées sur la base des pseudo-informations de capteur.

10. Procédé de diagnostic d'anomalie d'un système de diagnostic d'anomalie qui génère des informations de risque relatives à un risque qui est utilisé pour une commande de conduite automatique d'un véhicule lorsque le véhicule se déplace sur la base d'informations de capteur relatives à un objet autour du véhicule, le procédé comprenant les étapes consistant à :
générer une pluralité d'informations de risque sur la base des informations de capteur ; et
diagnostiquer si une anomalie survient ou non dans les informations de risque générées sur la base de la pluralité d'éléments d'informations de risque générées.
